# EUROPEAN PATENT APPLICATION

(11) **EP 2 772 877 A1**
(43) Date of publication of application: **03.09.2014**
(21) Application number: 13196073.4
(22) Date of filing: 06.12.2013
(51) Int. Cl.: G06Q 10/06

(54) **Method and system for automated detection of inconsistencies in a plant model**

(30) Priority: 28.02.2013 EP 13157248
(71) Applicant: Siemens Aktiengesellschaft, 80333 München (DE)
(72) Inventor: Abele, Lisa Theresa, 80798 München (DE); Grimm, Stephan, 81825 München (DE); Legat, Christoph, 82140 Olching (DE); Müller, Andreas, 91083 Baiersdorf (DE)

(57) **Abstract**

The invention describes a method for automated detection of inconsistencies in a plant model which is provided or expressed in a predetermined data format during a design and engineering phase, wherein the plant model consists of at least a number of plant components and the plant devices. The method comprises the steps of transforming the plant model from the predetermined data format into an ontology as a means of knowledge representation having a formal semantics (S4); and performing an automated reasoning and/or querying (S5) for validation (S6) based on the ontology as a transformation result by evaluating logic-based constraints using an inference mechanism.

## Description

The invention relates to a method and a system for automated detection of inconsistencies in a plant model during a design and engineering phase.

In the course of planning and engineering production plants, plant models which are sometimes referred to as engineering models are used to support engineers. Nevertheless, inconsistencies in the underlying engineering models covering aspects that affect a plant structure, interconnection topology, device specifications etc., frequently occur. These inconsistencies are sometimes due to the continuous, lifecyclespanning extension and revision of the models required for planning. On the other hand, these inconsistencies are further caused by interdisciplinary collaboration of engineers from various fields with different backgrounds.

Such inconsistencies hinder an engineering progress and also have negative impact on the error-free design and construction of plants, which leads to delays in commissioning caused by carrying out the implied corrections. Finding and removing such inconsistencies may require significant time, efforts and resources.

Examples for said inconsistencies in plant models include:
- Two distinct elements in the engineering model might accidentally be assigned the same identifiers and names due to the collaborative construction of the engineering model
- Requirements explicitly stated in an engineering model might not be fulfilled by the respective physical components. For example, a selected type of motor might have a too small dimension for a required rotational speed.
- Inter-component connections might have been designed in a wrong way. For example, a ProfiNet connection of a drive has been accidentally connected to an unfitting Profibus connection of an industrial PC.

Current approaches and tools that support the planning phase provide only sparse automation, if at all, of the process of selecting appropriate components from the plant model. For instance, the selection of specific components and devices that meet all requirements of the planned functional units can require significant manual effort when requirements have to be matched and validated separately and manually for all components involved.

Current model-based tools for plant design generally lack of an implemented automated means for a validation, or there are only sporadic and rigid domain-specific checks. However, domain-specific checks are implemented in a hardwired manner within current tools, so that these kinds of domain-specific checks cannot be flexibly parameterized or extended to custom validations.

Existing tools using, for example, the known exchange format CAEX (Computer Aided Manufacturing Exchange) are mapping various planning strategies and perform specific consistency checks as well. Beyond the employment of model-based approaches to plant design, inconsistencies are in practice detected during a late phase of assembly and commissioning, which is of course disadvantageous for planning and engineering production plants.

So far, automated planning support for the plant designer using model-based queries with an intrinsic alignment of requirements is not being offered by engineering tools. For instance, identification of suitable components is performed purely manual. In some cases, remote support for filtering is offered by tool providers. However, this is realized on an algorithmic basis, unusable by external tools.

It is an object of the present invention to provide a method and a system which improve the process of planning and engineering a production plant.

These objects are solved by a method according to claim 1, a computer program product according to claim 9 and a system according to claim 10. Preferred embodiments are set out in the dependent claims.

According to a first aspect of the invention, a method for automated detection of inconsistencies in a plant model which is provided or expressed in a predetermined data format during a design and engineering phase is provided. The plant model consists of at least a number of plant components and plant devices. The method comprises the steps of transforming the plant model from the predetermined data format into an ontology as a means of knowledge representation having a formal semantics; and performing an automated reasoning and/or querying for validation based on the ontology as a transformation result by evaluating logic-based constraints using an inference mechanism.

Proceeding this way, designers of production plants are supported in the automated detection of inconsistencies in a plant model during the design and engineering phase as well as in completing model information. The usage of an ontology as a transformation result allows for automated validation and consistency checking by means of automated reasoning and inference techniques. Based on the ontology as a transformation result, automated reasoning can be performed for validation purposes.

In the present invention, a plant device is a single device such as a sensor, an actor, etc., while a plant component may comprise a plurality of devices which are aggregated to provide a predetermined functionality of the plant component.

According to a further aspect of the present invention, the step of transforming the plant model comprises the step of representing requirements of the plant components and/or the plant devices in the ontology by means of the logic-based constraints.

It is preferred, that according to a further embodiment of the method, logic-based constraints are checked against likewise represented properties of the plant components and the plant devices using the inference mechanism.

According to a further aspect of the present invention, intended connections between the plant components and the plant devices are formally represented in the ontology and checked against criteria for coherence using the inference mechanism.

According to a further aspect of the present invention interconnections between plant components and devices are introduced into the ontology by way of assertions. A usage of ontologies as formal knowledge models together with associated inference mechanisms is particular advantageous over a currently practiced algorithmic validation functionality which is often rigidly integrated in engineering tools. The advantage particularly lies in the flexibility regarding modular extension by custom validation criteria as part of the plant model. Furthermore, background knowledge about facts or correlations within the model becomes available in an explicit way, leaving the disadvantages of purely algorithmic solutions behind, which are merely able to include such knowledge within a rather inaccessible program code.

According to a further aspect of the present invention, semantic querying is executed issued against the ontology resulting from the plant model transformation in order to support a plant designer in acquiring implicit knowledge about the plant during a design phase. Semantic querying refers to the answering of an arbitrary complex query in a structured query language (e.g. SPARQL) by involving automated reasoning techniques that derive implicit knowledge from explicit database entries. Hence, the result to the query does not only comprise information explicitly stated in the database/model but also information that is being made available at runtime in terms of deductive data completion. In this way, suitable candidates for supplying functional units within the plant may be identified from catalogues of devices and their suitability may be validated by considering formally and explicitly stated requirements in the ontology.

According to a further aspect of the present invention, for each of the different predetermined data format a respective transformation instruction is provided. CAEX (Computer Aided Engineering Exchange), for example, is a standard data exchange tool for plant knowledge that assists experts during the plant construction process. CAEX is a XML-based data format as part of the AutomationML language specification. For example, CAEX may be used as one of the predetermined data formats. However, other data exchange formats may be used as well.

According to a second aspect of the present invention, a computer program product directly loadable into the internal memory of a digital computer, comprising software code portions for performing the steps of one of the preceding claims when said product is run on a computer, is suggested.

According to a third aspect of the present invention, a system for automated detection of inconsistencies in a plant model which is provided or expressed in a predetermined data format during a design and engineering phase is suggested. The plant model consists of at least a number of plant components and plant devices. The system comprises a first means for transforming the plant model from the predetermined data format into an ontology as a means of knowledge representation having a formal semantics; and a second means for performing an automated reasoning and/or querying for validation based on the ontology as a transformation result by evaluating logic-based constraints using an inference mechanism.

The invention advantageously provides a mapping of problems in plant validation and of functionality for design support to semantic modeling in combination with associated inference mechanisms. This allows for solving these problems using common inference engines and saves the implementation of validation features in engineering tools and the related effort to do so.

Furthermore, flexibility and extensibility of engineering tools is improved with regard to the introduction of new validation criteria by using fragments of semantic models, i.e. for extending a tool with new validation functionality. Formal semantic knowledge models depict a more capable basis for validation purposes than simple data formats as they are currently in use for the representation of plant structures.

In view of currently known problems in the art having been stated above, the following advantages are being achieved:
By automating the validation of plant models for inconsistencies, incorrect assembly of production plants can be avoided. Temporal efforts for error checking during design and commissioning of plants as well as additional expenses required due to perpetuated planning on a faulty basis can be reduced or even avoided.

By contrast, the invention allows formally verifiable conditions for requirements of plant components. Further on, devices of the plant may be generically introduced into the ontology as a basis for an automated validation.

Likewise, requirements of interconnections (e.g. wiring) between plant components and devices may be introduced into the ontology by way of assertions (which are specific for the particular plant or type of plant) in a modular way without the need of implementing checking functionality in engineering tools.

In order to support plant designers during their work, semantically rich queries based on the semantic structure of the ontology underlying the plant model may be formulated and answered using inference mechanisms. Hereby, automated identification of suitable devices is supported, reducing the effort required for manual selection of fitting functional units.

Hereinafter, a proposed embodiment of the invention for an automated validation of plant engineering data, i.e. an inconsistency detection, is described for a particular set of technologies.
- Fig. 1: shows a flow chart of the method according to the invention.
- Fig. 2: shows an exemplary engineering process of CAEX.
- Fig. 3: shows a base ontology for CAEX in form of an UML class diagram.
- Fig. 4: shows an example for identification of Internal Elements (IE) in an ontology.
- Fig. 5: shows an example for validation of attribute consistency.
- Fig. 6: shows an example for validating the correctness of Internal Links via attributes of connected Interfaces.
- Fig. 7: shows a table with a transformation scheme for mapping of CAEX elements to corresponding OWL elements.

The currently most recognized standard data exchange tool for plant knowledge that assists experts during the plant construction process is the XML-based data format Computer Aided Engineering Exchange (CAEX) [1] as part of the AutomationML language specification, which was especially developed to meet the requirements of the engineering domain. The specific examples described hereinafter are made by reference to CAEX. They are intended for purposes of illustration only and are not intended to limit the scope of the present invention.

During the plant construction process various experts with different backgrounds are involved, such as electrical engineers, mechanical engineers, etc. In the course of maintaining a CAEX model of the plant that integrates their knowledge, various inconsistencies might be introduced, e.g. distinct elements accidentally get the same identifier, electrical connections are modeled incorrectly, etc. In order to work with a consistent model of the plant, such inconsistencies have to be identified and corrected. However, CAEX does not provide the built-in mechanisms to easily support automated validation of plant models. In particular, it is not based on unique identification of plant elements and does not come with a formal semantics that allows for reasoning and querying over plant knowledge.

Semantic Web technologies, on the other hand, offer such built-in mechanisms for querying and reasoning over domain models expressed in form of ontologies. In particular, the Web Ontology Language (OWL) is equipped with a formal semantics, which accounts for a precise formulation of restrictions over domain models that can be validated using available standard reasoning and querying tools.

The invention describes an approach for the automated validation of CAEX plant models by means of their transformation into OWL ontologies and subsequent application of reasoning mechanisms to realize various validation features. In particular, a base ontology model that captures the essential CAEX notions in OWL fixing basic design decisions of ontological plant representation will be used. Based on this, a detailed mapping from CAEX models to OWL ontologies as a basis for automated transformation is specified and used for the transformation process. For validation features along the CAEX plant engineering process Semantic Web reasoning and querying techniques will be used.

CAEX is been defined in IEC 62424 [2] as a meta model for the definition, storage and exchange of engineering models. Its addressed topics are briefly summarized with corresponding modelling concepts in the following.
- Description of a concrete containment hierarchy of components (InstanceHierarchy, abbrev. IH), from top-level plant down to single components (InternalElements, IEs) with interfaces (ExternalInterfaces, EIs) and relations (InternalLinks, ILs)
- Reusable SystemUnitClasses (SUCs) defining component types down to their respective technical realizations organized in vendor-specific product catalogues. Therein, available hardware components are defined and detailed by the vendor.
- Reusable role definitions for abstract descriptions of components (RoleClasses, RCs).
- Reusable InterfaceClasses (ICs) for specifying connection points of RCs, SUCs and the interface type of EIs.
- Attributes are used for describing the characteristics of each previously introduced modelling element.

By definition, CAEX supports object-oriented modeling for all of these aspects. EIs depicting SUC instances are connected by ILs via EIs which in turn are instances of ICs.

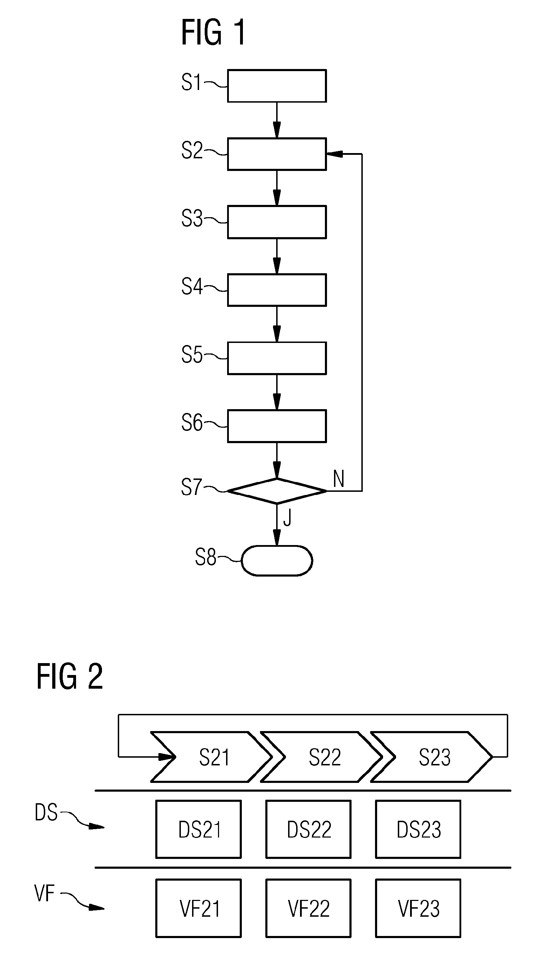

The engineering process using the CAEX standard consists basically of three major steps S21, S22, S23 as depicted in Fig. 2. In each of the three steps S21, S22, S23 CAEX definitions DS are defined resulting in features to be validated (VF). According to the currently executed step (S21, S22, S23) the CAEX definition DS and the validation features VF are annexed with the corresponding number (21, 22, 23) of the currently executed step S21, S22 or S23. In the first step S21 roles to be used in the respective domain are defined (DS21). User-specific RCs are defined as specializations of standard RCs given by the AML standard libraries. For creating a CAEX model of an exemplary facility, for example, a basic RC Drive may be refined as a specialized RC ConveyorDrive with constrained Attributes MaxSpeed and MaxEnergyConsumption and an IE defining a required ProfiNet communication capability. An IH representing a requirements-based containment view of the intended plant is created with IEs that are assigned to the concretized roles. Since a variety of experts are working on the engineering model concurrently, different IEs representing the same physical component might occur. To support the consistency of the model, the identification of those IEs is required.

As the second step S22, defined RCs are used for selecting appropriate components from vendor-specific product catalogues (DS22). Therein, available hardware components are defined and detailed by the vendor by means of SUCs. After manually selecting an adequate SUC, it is assigned to previously defined IEs. Due to the manual process of SUC selection and the variety of attributes which have to be considered, SUCs not fulfilling the role requirements completely might be assigned.

In the third step S23, the IEs are connected by ILs, representing the plant-specific, individual connections between components (DS23). Thus, the previously defined IH of the plant is completed. The IH is completed by modelling, among others, the communication connections (as IL) of the motor based on its ProfiNet port represented as EI. Due to the complexity of a plant model, incorrect connected IEs can occur. In order to identify such inconsistencies as early as possible, ILs need to be checked for properly connected EIs. Below described procedure helps avoiding inconsistencies during plant engineering which is made with the help of an ontological representation of the plant model deduced in the manner described above. To this end, a base ontology model for capturing the basic notions of CAEX together with a transformation process for mapping CAEX plant models to ontologies will be used. Before, a short description of the Web Ontology Language (OWL) used as a representation framework will be made.

The Web Ontology Language OWL described in [3] is a W3C standard for representing ontologies, the main building blocks for expressing knowledge in the Semantic Web. It can be used to express taxonomies of classes and relationships between conceptual notions, such as the various components of a plant, and is thus apt for representing plant knowledge.

The basic elements of OWL are classes (like a motor denoted with Motor1FK7), individuals (like a specific motor m1) as instances of classes, and properties between individuals (like wiredTo). Statements in OWL, using the class, individual and property vocabulary are called axioms. It is considered that the most recent and prominent language variant OWL DL, which distinguishes terminological knowledge at class level (e.g. axioms stating subclass relationship) from assertional knowledge at instance level (e.g. axioms asserting an individual as an instance of a class). A specialty of OWL is to support logic-inspired language constructors for forming complex classes out of simpler ones. An example of an assertional axiom using a complex class expression is the following: ClassAssertion(ObjectIntersectionOf(Motor ObjectSomeValuesFrom(hasManufacturer "Siemens")) 1FK7), which states that the individual 1FK7 is an instance of the complex class made of all motors that have "Siemens" as manufacturer.

OWL has support for reasoning and querying, which allows for the validation of and for the retrieval of implicit knowledge from ontologies. These mechanisms can be used for validating plant models obtained from their original CAEX descriptions. For querying, for example, inferences can be built on the SPARQL [4] query language OWL 2 DL inferences, as described in [5].

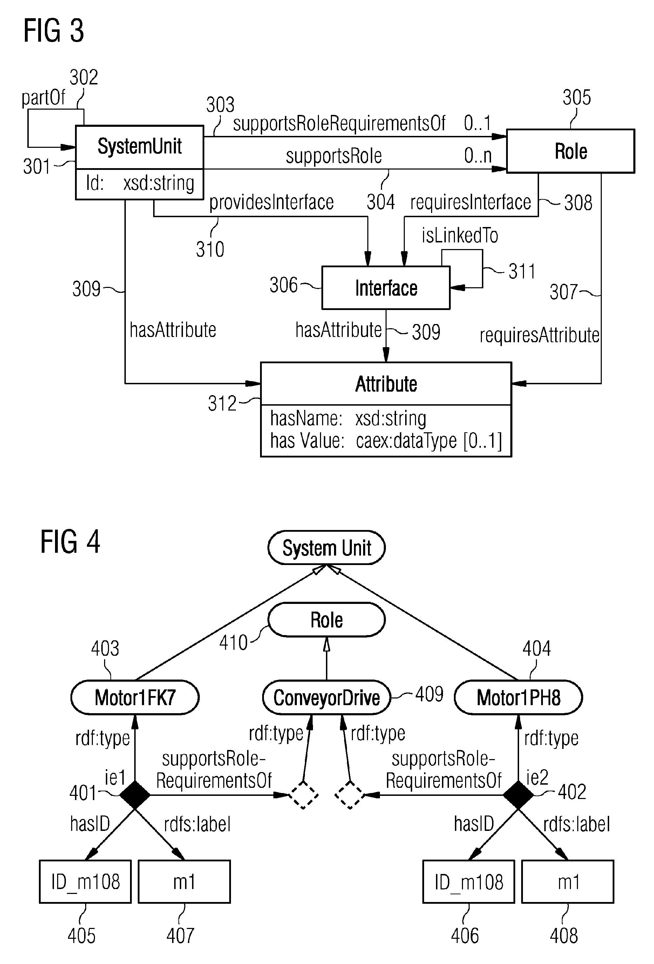

The transformation from CAEX to OWL builds on a base ontology, denoted by O_{base}, which captures some basic design decisions of representing CAEX plant models in OWL ontologies. Figure 3 shows the OWL representation of the major CAEX notions in O_{base} in form of an UML class diagram. Following a suggestion in [6], SUCs, as well as RCs and ICs, are represented at the terminological level in terms of OWL classes. The IEs of a given IH are then represented at the assertional level as instances of the basic class SystemUnit (301). Containment between IEs according to the IH is expressed by means of the OWL property 302 ("part of").

There are two possibilities to connect SUCs 301 ("SystemUnit") with RCs 305 ("Role"). If a SUC 301 fulfills all requirements defined in a RC 305 it is connected via a property 303 ("supportsRoleRequirementsOf") to its RC 305 and plays exactly the specified RC 305 in the industrial plant, e.g. the "Motor 1FK7" plays the role of a "Conveyor Drive". All other RCs 305 the SUC 301 can potentially support are connected by the property 304 ("supportsRole"), e.g. the "Motor 1FK7" can play the role of a "Mixer Drive" or "Pump Drive".

The requirements that have to be fulfilled by a SUC are specified in an attribute 312 ("Attribute") and an interface class 306 ("Interface") connected to the RC 305 whose requirements it is said to support. The RC 305 may require attributes expressed by the property 307 ("requiresAttribute"), such as the maximum torque of a "Siemens Motor 1FK7" to be 10000 rpm. In a similar way, an RC can require the respective SUC to support ICs, such as the "Siemens Motor 1FK7" requiring a "Signal Interface", which is represented by means of the property 308 ("requiresInterface").

Properties 309 ("has Attribute") and 310 ("providesInterface") are used to specify all attributes and ICs attached to a SUC.

The property 311 ("isLinkedTo") is meant to express ILs between the EIs related to ICs. Thus, ICs are represented in terms of the class interface and EIs are represented in terms of instances thereof.

Next, a transformation process is described in which a custom plant model described in a specific CAEX document is mapped to a respective OWL ontology Oₚₗₐₙₜ that represents this plant model in alignment with the basic notions introduced in O_{base}. The resulting ontology Oₚₗₐₙₜ reuses the vocabulary from O_{base} by means of owl:imports. In fact, standard libraries, such as vendor-specific component catalogues used by the original CAEX model, can be transformed separately to result in separate ontologies that have different namespaces and are linked via owl:imports as well.

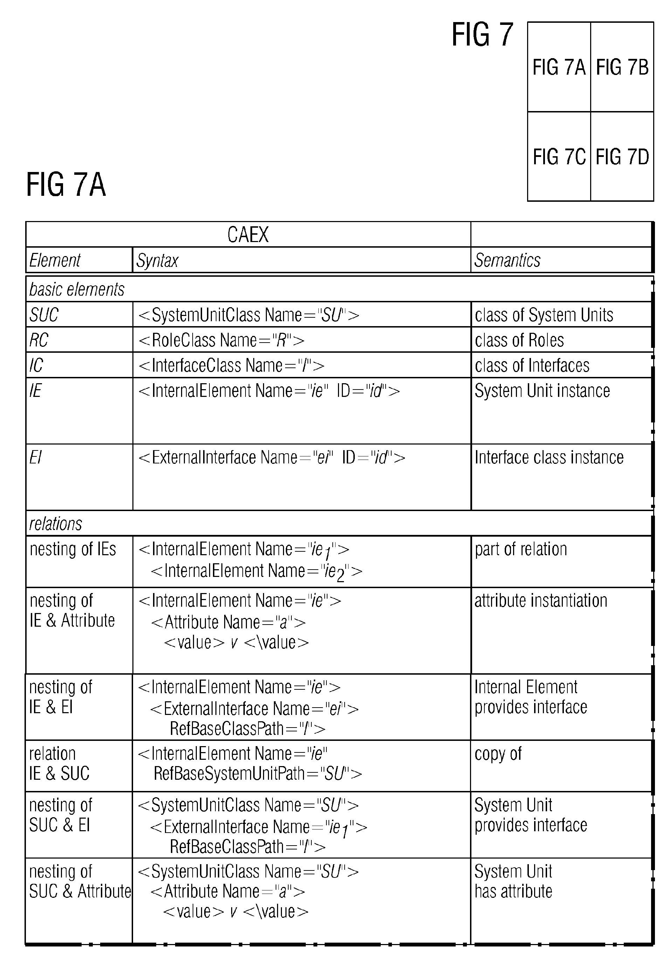

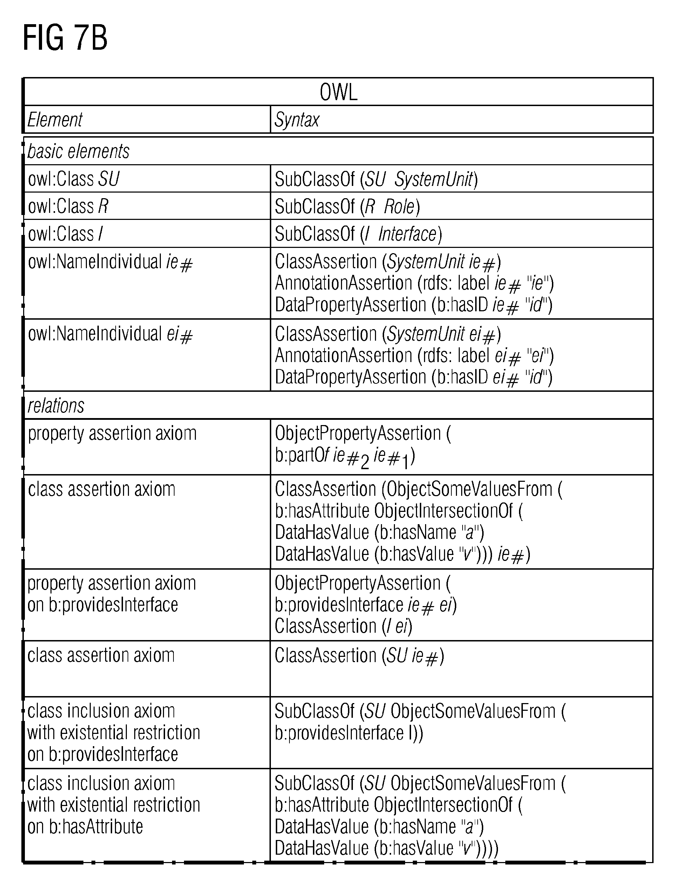

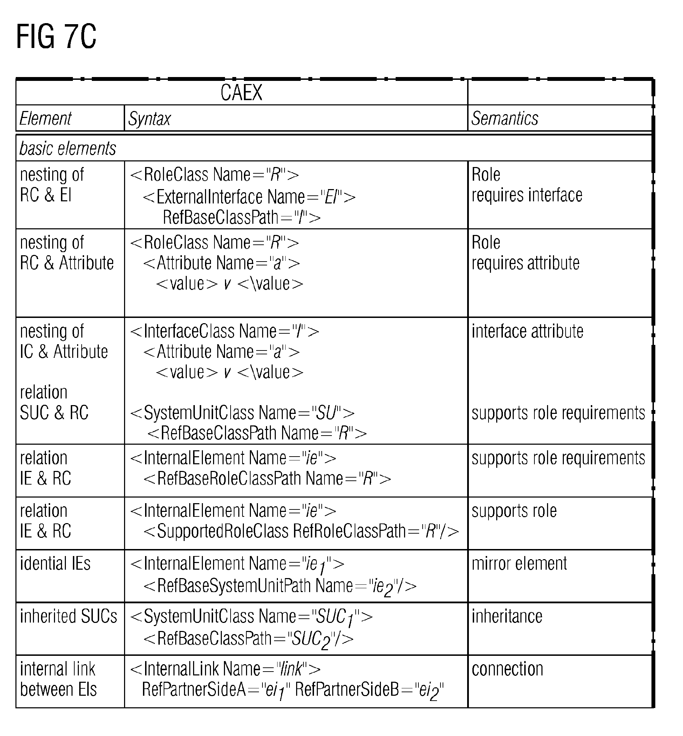

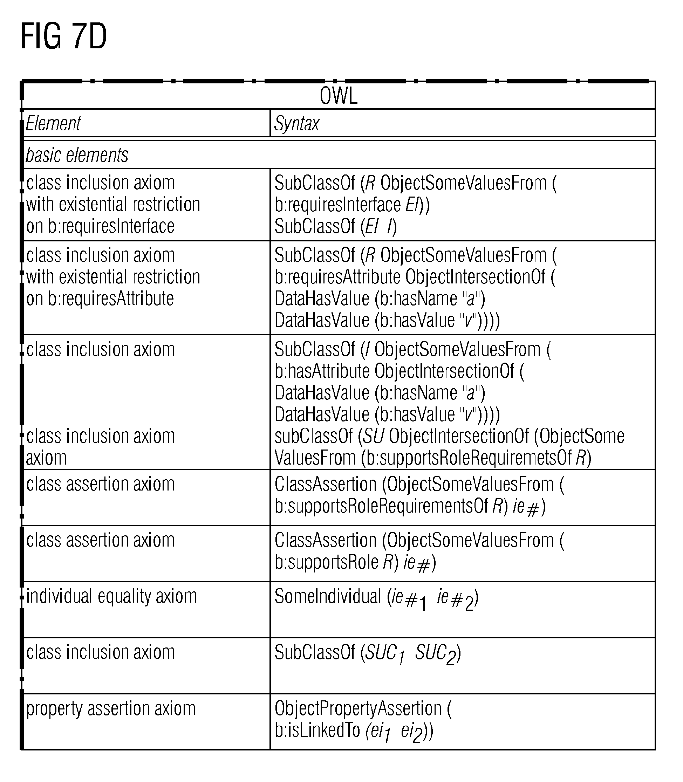

The table in Fig. 7 specifies in a transformation scheme the transformation process in detail by indicating the mapping of CAEX elements on the left-hand side to corresponding OWL elements on the righthand side in terms of syntax, semantics and nature of the respective language element. The top part of the table describes the mapping of the basic elements of a CAEX model, whereas the main part specifies how relations between basic CAEX elements, such as XML-nesting or the use of reference attributes, are mapped to OWL. Variables written in italic are used in places where text fragments from the original CAEX model are reused in OWL syntax expressions.

Mapping between CAEX and OWL, SUC = SystemUnitClass, IC = InterfaceClass, IE = InternalElement, EI = ExternalInterface, ie# = Identifier for IEs

In particular, the names of SUCs, RCs and ICs are reused for naming their respective class entity in Oₚₗₐₙₜ, assuming that they are consistently and uniquely named in the CAEX model. For IEs, however, no such assumption is made and new identifiers for their corresponding OWL individuals are created during transformation according to a number scheme, such as simply counting the occurrences of name/id pairs of IEs. In this sense, ie# stands for the individual that corresponds to the IE in the context of the currently considered CAEX IE XML tag.

A plant's containment hierarchy encoded in the nesting of CAEX internal elements, for example, is mapped to OWL object property assertions between the respective named individuals using the basic property "part of". On the other hand, attributes of SUCs, IEs, etc. are instantiated anonymously by existential restrictions at the terminological level: instead of assigning a named individual as an attribute, the respective SUC is stated to have an attribute with the specified name and value in an owl:subClassOf statement. Furthermore, it is made use of owl:sameAs statements between IE individuals to represent the notion of CAEX mirror elements, i.e. IEs that represent the same plant element.

In the following, three consistency checks along the CAEX process that is implemented with Semantic Web technologies will be described. An ontology of the application scenario as defined above serves as example. First, the operator is supported in identifying identical IEs. Further, the Role requirements of all Internal Elements and then the correctness of internal links is validated.

CAEX allows several plant operators with different expertise to extend a plant hierarchy with additional IEs during the first phase (S21 in Fig. 2) of the CAEX engineering process (VF21 in Fig. 2). It might happen that two distinct elements accidentally have the same Id, name and RC. According to the standard IEC 62424 two IEs are identical if their names, Ids and RCs are equivalent. Based on these criteria, an aim is to select all IEs with a SPARQL query to support the operator in deciding if these IEs were meant to be identical or if they accidentally have the same identifiers. The SPARQL query expressed in the OWL functional-style syntax has the following structure:
SELECT (?ie1 ?name ?id ?ie2) WHERE {
AnnotationAssertion (rdfs:label ?ie1 ?name)
DataPropertyAssertion (:hasID ?ie1 ?id)
AnnotationAssertion (rdfs:label ?ie2 ?name)
DataPropertyAssertion (:hasID ?ie2 ?id)
ClassAssertion (ObjectSomeValuesFrom (:supRoleReqOf ?role) ?ie1)
ClassAssertion (ObjectSomeValuesFrom (:supRoleReqOf ?role) ?ie2)
FILTER (?ie1 != ?ie2) }

An exemplary ontology with two identical IEs 401 ("ie1") and 402 ("ie2") is shown in Figure 4. IEs of two different SUCs 403 ("Motor1FK7") and 404 ("Motor1PH8") have identical Ids 405 and 406 ("ID-m108") and names 407 and 408 ("m1") and they support the requirements of the same RC 409 ("ConveyorDrive"). The SPARQL query applied on the exemplary ontology identifies the individuals 401, 402 ("ie1" and "ie2"). If these two IEs 401, 402 were meant to be different, the operator has to change their Id, name or Role Class (402).

In the second step S22 of the CAEX engineering process of Fig. 2, appropriate SUCs for the IEs based on the requirements defined in the according RCs are manually selected (DS22 in Fig. 2). An issue of this selection task is that the operator is often confronted with an enormous list of requirements. It might thus happen that requirements of an IE as defined by its RC are not entirely fulfilled by its SUC. To support the operator, RC requirements are validated (VF22 in Fig. 2) by checking the attributes of all RCs and SUCs assigned to an IE. A SPARQL query is defined to identify all IEs where the attributes do not match. SPARQL queries under OWL entailement regime are used as described by [5] expressed in OWL functional-style syntax with the following structure:
SELECT (?a ?role ?valR ?ie ?valIE) WHERE {
ClassAssertion (ObjectSomeValuesFrom (:supRoleReqOf ?role) ?ie)
ClassAssertion (?suc ?ie)
SubClassOf (?role ObjectSomeValuesFrom (:prescribesAttribute ObjectIntersectionOf (DataHasValue (:hasValue ?valR) DataHasValue (:hasName ?a))))
SubClassOf (?sucObjectSomeValuesFrom (:hasAttribute ObjectIntersectionOf( DataHasValue ( :hasValue ?valIE) DataHasValue (:hasName ?a))))
FILTER (?valR != ?valIE)}

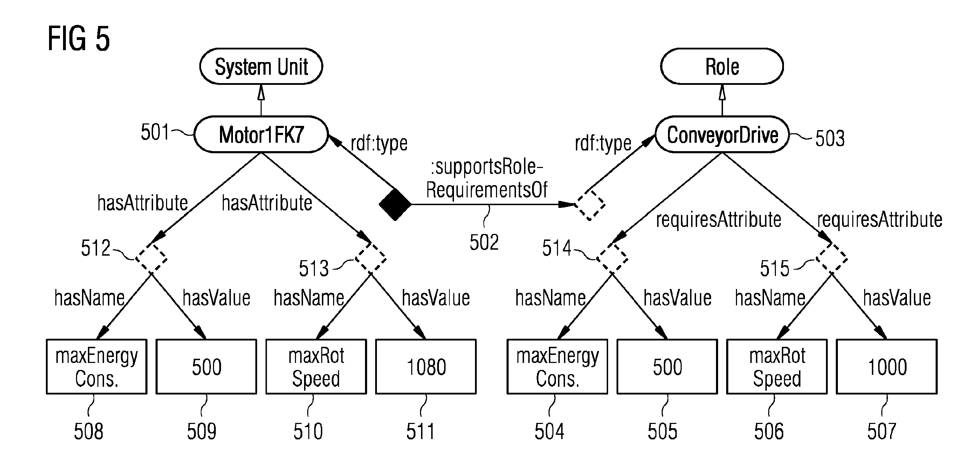

In Figure 5, for validation of attribute consistency an example is illustrated. The attributes 512, 513 of the IE 501 ("m1FK7") which is an instance of Motor1FK7 and supports the role requirements 502 of the RC 503 ("ConveyorDrive") are validated. Attributes of the RC 503 ("ConveyorDrive") are depicted with 514, 15. This RC requires a maximum energy consumption (attribute 504, "maxEnergyCons") with a value 505 ("500 W") and a maximum speed (attribute 506, "maxRotSpeed") with a value 507 of "1000 rpm". Motor1FK7 501 supports only the required value 509 ("500 rpm") of attribute maxEnergyCons 508, a conflicting attribute is maxRotSpeed since its value 511 ("1080") is too high for the ConveyorDrive 503.

A similar query can be defined to validate the attributes of EIs required by RCs.

User-defined libraries may be used for the development of exchangeable plant models in CAEX. These libraries, e.g. AutomationMLBaseLibs, can provide an extended vocabulary with additional semantics not provided by CAEX. When defining libraries, their additional semantics may be as currently described informally in [2].

The standard AutomationMLBaseInterfaceLib for example defines SignalInterfaces with an attribute "Direction", which can have the values "In", "Out" or "InOut". According to the AutomationML standard, SignalInterfaces with the direction "In" can only be connected to SignalInterfaces with the direction "Out" or "InOut" and SignalInterfaces with the direction "Out" can only be connected to SignalInterfaces with direction "In" or "InOut". SignalInterfaces with the direction "InOut" can be connected to SignalInterfaces of arbitrary direction. In order to validate correct wiring, this semantics needs to be defined formally.

To support operators that use the SignalInterface attributes of the AutomationMLBaseInterfaceLib, all Signal Interfaces with direction "In" or "Out" which are connected to an IC of the same direction are identified. The ontology O₃ which contains the required axioms for realizing this feature has the following structure:
O₃ = SubClassOf (SignalInterfaceIn ObjectIntersectionOf (SignalInterfaceObjectSomeValuesFrom (:hasIntAttribute ObjectIntersectionOf (DataHasValue (:hasValue "In") DataHasValue (:hasName"Type"))))), SubClassOf (SignalInterfaceOut ObjectIntersectionOf (SignalInterface ObjectSomeValuesFrom (:hasIntAttribute ObjectIntersectionOf (DataHasValue (:hasValue "Out") DataHasValue (:hasName "Type"))))), EquivalentClass (MiswiredSignalInterface ObjectUnionOf (ObjectIntersectionOf (ObjectSomeValueFrom (:isLinkedTo Signal IntefaceIn) SignalInterfaceOut) ObjectIntersectionOf (ObjectSomeValuesFrom (:isLinkedTo SignalInterfaceOut) SignalInterfaceIn))))

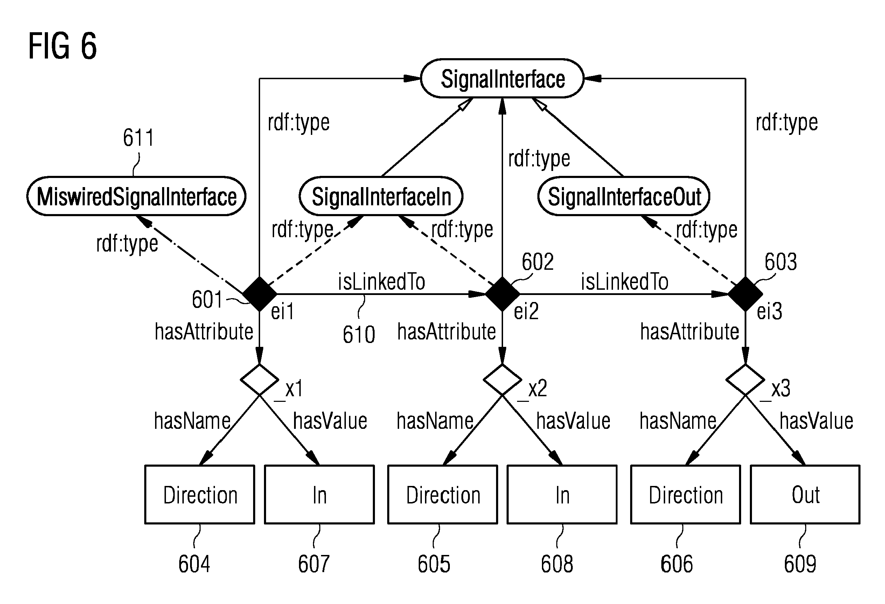

Based on O₃, individuals which are inferred to be instances of the MiswiredSignalInterface class can be identified as incorrectly wired. As depicted in Fig. 6, the EIs 601, 602, 603 are classified based on their direction attribute to the SignalInterfaceIn 607, 608 or SignalInterfaceOut 609, respectively. Since the EI 601 ("ei1") which has the direction "In" (607) is linked to EI 602 ("ei2") which has the same direction "In" (608), ei1 is additionally identified as MiswiredSignalInterface (611). Since the EI 602 ("ei2") which has the direction "In" (607) is linked to EI 603 ("ei3") which has a different direction "Out" (609), no miswiring is present.

Fig. 1 shows a flow chart of the method according to the invention which has been described above in a short overview. In step S1 a transformation scheme is provided. The transformation scheme is developed once depending from the exchange format based on Semantic Web technology which will be used for describing a plant model.

In step S2 plant engineering is performed by a plant engineer which results in a plant model (step S3). In the plant model, System Units (i.e. compontens), Roles (i.e. component requirements), Internal Elements (i.e. components instances) etc. as described above are defined.

Step S4 comprises the transformation of the plant model. To this end, the plant model that is, for example, originally expressed in the CAEX exchange format based on Semantic Web technology is transformed by means of the transformation scheme to OWL constructs.

In step S5 a validation and a consistency check is performed by applying reasoning and querying resulting in a validation result (S6).

If the verification in step S7 holds that the validation result is ok ("J") the methods ends (S8). In case the validation result is not ok ("N") the method proceeds with step S2 again.

### List of references:

[1] M. Schleipen, R. Drath, and O. Sauer, "The system-independent data exchange format CAEX for supporting an automatic configuration of a production monitoring and control system," 2008 IEEE International Symposium on Industrial Electronics, pp. 1786-1791, Jun. 2008.
[2] IEC 62424 - Representation of process control engineering, IEC Std., 2008.
[3] OWL Working Group, OWL 2 Web Ontology Language: Document Overview. W3C Recommendation.
[4] "SPARQL Query Language for RDF," Tech. Rep., 2008.
[5] B. P. Birte Glimm, "SPARQL 1.1 Entailment Regimes," W3C, Tech. Rep., 2010.
[6] S. Runde, D. K. Güttel, and A. Fay, "Transformation von CAEX Anlagenplanungsdaten in OWL," Automation, vol. VDI Verlag, pp. pages 175-178, 2009.
[7] AutomationML consortium, "Whitepaper AutomationML ," Tech. Rep., 2012.

## Claims

1. A method for automated detection of inconsistencies in a plant model which is provided or expressed in a predetermined data format during a design and engineering phase, wherein the plant model consists of at least a number of plant components and the plant devices, the method comprising the steps of:
- transforming the plant model from the predetermined data format into an ontology as a means of knowledge representation having a formal semantics (S4); and
- performing an automated reasoning and/or querying (S5) for validation (S6) based on the ontology as a transformation result by evaluating logic-based constraints using an inference mechanism.

2. The method according to claim 1, wherein transforming the plant model comprises representing requirements of the plant components and/or the plant devices in the ontology by means of the logic-based constraints.

3. The method according to claim 1 or 2, wherein the logic-based constraints are checked against likewise represented properties of the plant components and the plant devices using the inference mechanism.

4. The method according to one of the preceding claims, wherein intended connections between the plant components and the plant devices are formally represented in the ontology and checked against criteria for coherence using the inference mechanism.

5. The method according to one of the preceding claims, wherein interconnections between plant components and devices are introduced into the ontology by way of assertions.

6. The method according to one of the preceding claims, wherein semantic querying is executed against the ontology resulting from the plant model transformation in order to support a plant designer in acquiring implicit knowledge about the plant during a design phase.

7. The method according to one of the preceding claims, wherein for each of the different predetermined data format a respective transformation instruction is provided.

8. The method according to one of the preceding claims, wherein the predetermined data format is CAEX.

9. Computer program product directly loadable into the internal memory of a digital computer, comprising software code portions for performing the steps of one of the preceding claims when said product is run on a computer.

10. A system for automated detection of inconsistencies in a plant model which is provided or expressed in a predetermined data format, in particular CAEX, during a design and engineering phase, wherein the plant model consists of at least a number of plant components and plant devices, the system comprising:
- a first means for transforming the plant model from the predetermined data format into an ontology as a means of knowledge representation having a formal semantics; and
- a second means for performing an automated reasoning and/or querying for validation based on the ontology as a transformation result by evaluating logic-based constraints using an inference mechanism.
